(19) Europäisches Patentamt
European Patent Office
Office européen des brevets

(11) **EP 2 518 861 A1**

(12) **EUROPEAN PATENT APPLICATION**
published in accordance with Art. 153(4) EPC

(43) Date of publication:
**31.10.2012 Bulletin 2012/44**

(51) Int Cl.:
*H02J 17/00* *(2006.01)*

(21) Application number: **09852505.8**

(22) Date of filing: **24.12.2009**

(86) International application number:
**PCT/JP2009/007196**

(87) International publication number:
**WO 2011/077488 (30.06.2011 Gazette 2011/26)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Kabushiki Kaisha Toshiba**
**Minato-ku**
**Tokyo 105-8001 (JP)**

(72) Inventor: **KUDO, Hiroki**
**Minato-ku**
**Tokyo (JP)**

(74) Representative: **HOFFMANN EITLE**
**Patent- und Rechtsanwälte**
**Arabellastrasse 4**
**81925 München (DE)**

(54) **WIRELESS POWER TRANSMISSION APPARATUS**

(57) Disclosed is a wireless power transmission apparatus (1) which is provided with: a first drive unit (101a) and a second drive unit (101b), which output alternating currents; a first phase shifter (102a) and a second phase shifter (102b), which control the phases of the alternating currents outputted from the first drive unit (101a) and the second drive unit (101b); a first power transmission coil (103a), which generates a magnetic field when the first alternating currents are made to flow, said first alternating currents having the phases thereof controlled by means of the first phase shifter (102a); a second power transmission coil (103b), which has the center axis thereof disposed at a position different from the center axis of the first power transmission coil (103a), and which generates a magnetic field when the second alternating currents are made to flow, said second alternating currents having the phases thereof controlled by means of the second phase shifter (102b); and a phase control unit (104), which controls the first phase shifter (102a) and the second phase shifter (102b) such that the first phase of the first alternating currents and the second phase of the second alternating currents are the same or reversed. With the wireless power transmission apparatus (1), high power transmission efficiency can be achieved, irrespective of the relationship with the position and the direction of a power receiving apparatus (2).

FIG. 1

**Description**

TECHNICAL FIELD

The present invention relates to wireless power transmission.

BACKGROUND ART

In recent years, wireless power transmission technology that transmits power in a noncontact manner by using a power transmitting coil and a power receiving coil has been adopted in many devices such as IC cards, mobile phones, electric toothbrushes, and shavers.
Power transmission technology using a resonance phenomenon by resonant coils has been known as the wireless power transmission technology (for example, Non-Patent Literature 1).

CITATION LIST

NON-PATENT LITERATURE

Non-Patent Literature 1: "Kurs, A. et al., "Wireless Power Transfer via Strongly Coupled Magnetic Resonances," Science, vol. 317, no. 5834, pp. 83-86, 2007."

SUMMARY OF THE INVENTION

TECHNICAL PROBLEM

In power transmission described in Non-Patent Literature 1, transmission efficiency is significantly decreased depending on the orientation of a power receiving coil with respect to a power transmitting coil. As a result, there is a problem that the range of movement of a power receiving apparatus of a device containing such coils, particularly a power receiving apparatus containing the power receiving coil is limited.
An aspect of the present invention has an object to provide a wireless power transmission apparatus achieving high power transmission efficiency with stability regardless of the position of a power receiving apparatus with respect to the wireless power transmission apparatus.

SOLUTION TO PROBLEM

A wireless power transmission apparatus according to an aspect of the present invention is a wireless power transmission apparatus including a drive unit that outputs an alternating current, a phase shifter that controls a phase of the alternating current, a first power transmitting coil that generates a magnetic field by a first alternating current made to flow therethrough, the phase of the first alternating current being controlled by the phase shifter, a second power transmitting coil that has a center axis thereof arranged in a position different from the position of the center axis of the first power transmitting coil and generates the magnetic field by a second alternating current made to flow therethrough, the phase of the second alternating current being controlled by the phase shifter, and a phase control unit that controls the phase shifter so that a first phase of the first alternating current and a second phase of the second alternating current are in phase or reversed phase.

ADVANTAGEOUS EFFECTS OF INVENTION

According to a wireless power transmission apparatus according to an aspect of the present invention, high power transmission efficiency can be achieved with stability regardless of the position of a power receiving apparatus with respect to the wireless power transmission apparatus.

BRIEF DESCRIPTION OF THE DRAWINGS

FIG. 1 is a diagram showing the configuration of a wireless power transmission apparatus and a power receiving apparatus.
FIG. 2 is a diagram showing the configuration of a phase control unit of the wireless power transmission apparatus in FIG. 1.

FIG. 3 is a diagram showing examples of magnetic fluxes generated for each of in-phase control and reversed-phase control.

FIG. 4 is a diagram showing examples of a magnetic field vector when the phase of a current is changed.

FIG. 5 is a diagram showing an example of a physical relationship between power transmitting coils and a power receiving coil.

FIG. 6 is a diagram showing a relationship between a rotation angle and power transmission efficiency of the power receiving coil in the physical relationship of FIG. 6.

FIG. 7 is a diagram showing examples of the physical relationship between power transmitting coils of the wireless power transmission apparatus in FIG. 1.

FIG. 8 is a diagram showing the configuration of a wireless power transmission apparatus according to a first modification.

FIG. 9 is a diagram showing an example of the physical relationship between power transmitting coils of the wireless power transmission apparatus in FIG. 8.

FIG. 10 is a diagram showing the configuration of a wireless power transmission apparatus according to a second embodiment.

FIG. 11 is a diagram showing the configuration of a drive controller of the wireless power transmission apparatus in FIG. 10.

FIG. 12 is a diagram showing the relationship between the rotation angle and power transmission efficiency of the power receiving coil in the wireless power transmission apparatus of FIG. 10.

FIG. 13 is a diagram showing the configuration of a wireless power transmission apparatus according to a third embodiment.

FIG. 14 is a diagram showing an example of a storage unit of a selection unit in the wireless power transmission apparatus of FIG. 13.

FIG. 15 is a state transition diagram of a wireless power apparatus according to a third embodiment.

FIG. 16 is a procedure for deciding a power transmitting method of the wireless power apparatus according to the third embodiment.

FIG. 17 is a procedure for deciding the power transmitting method of the wireless power apparatus according to the third embodiment.

FIG. 18 is a diagram showing the configuration of a wireless power transmission apparatus according to a fourth embodiment.

FIG. 19 is a diagram showing an example of a combined magnetic flux generated in the power receiving apparatus of the present invention when the wireless power transmission apparatus according to the fourth embodiment is used.

DESCRIPTION OF EMBODIMENTS

The embodiments of the present invention will be described. A wireless power transmission apparatus according to the embodiments of the present invention includes at least two power transmitting coils in a mutually fixed relationship.

<First embodiment>

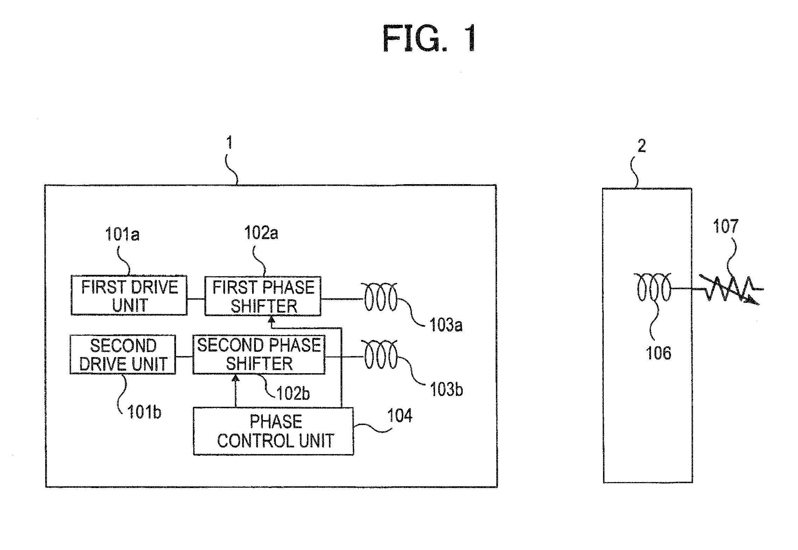

FIG. 1 shows a wireless power transmission apparatus 1 according to the first embodiment of the present embodiment and a power receiving apparatus 2 to which power (energy) is supplied from the wireless power transmission apparatus 1.

An application example is, for example, a system in which power can be supplied to a personal computer (PC) without a plug thereof being inserted into an outlet. More specifically, power can be supplied to a PC without a plug thereof being inserted into an outlet by installing the wireless power transmission apparatus 1 on a desk and providing the power receiving apparatus 2 receiving the supply of power from the wireless power transmission apparatus 1 in a PC temporarily placed on the desk. In such a case, a power receiving coil 106 contained in the power receiving apparatus 2 may be in various orientations (physical relationships) with respect to a first power transmitting coil 103a and a second power transmitting coil 103b.

The wireless power transmission apparatus 1 includes a first drive unit 101a, a second drive unit 101b, a first phase shifter 102a, a second phase shifter 102b, the first power transmitting coil 103a, the second power transmitting coil 103b, and a phase control unit 104. The power receiving apparatus 2 includes the power receiving coil 106. A load 107 is provided outside the power receiving apparatus 2.

The first power transmitting coil 103a, the second power transmitting coil 103b, and the power receiving coil 106 operate as an LC resonator by adding a capacitor and generates a magnetic field at a natural resonance frequency. The first power transmitting coil 103a and the second power transmitting coil 103b preferably have the same resonance frequency. Incidentally, the power receiving coil may contain a capacitor component such as a stray capacitance and operate as an LC resonator.

The first drive unit 101a and the second drive unit 101b outputs an alternating current passed to the first power transmitting coil 103a and the second power transmitting coil 103b respectively. The frequency of the alternating current is preferably the resonance frequency of each of the first power transmitting coil 103a and the second power transmitting coil 103b. Incidentally, the first drive unit 101a and the second drive unit 101b may be one drive unit.

The first phase shifter 102a and the second phase shifter 102b controls the phase of the alternating current output by the first drive unit 101a and the second drive unit 101b respectively. The first phase shifter 102a and the second phase shifter 102b control the phase of the alternating current under the control of the phase control unit 104 described later.

The phase control unit 104 controls the first phase shifter 102a and the second phase shifter 102b so that a first phase of the alternating current flowing in the first power transmitting coil 103a and a second phase of the alternating current flowing in the second power transmitting coil 103b are in phase or in reversed phase. A case when control is exercised so that the phase of the alternating current flowing between each power transmitting coil is in phase will be called "in-phase control" below. A case when control is exercised so that the phase of the alternating current flowing between each power transmitting coil is in reversed phase will be called "reversed-phase control".

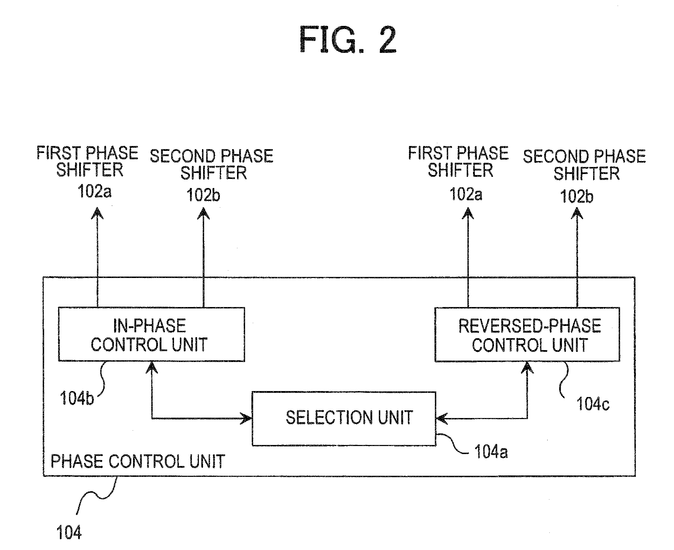

FIG. 2 shows an example of a detailed configuration of the phase control unit 104. The phase control unit 104 includes an in-phase control unit 104b that exercises the in-phase control, a reversed-phase control unit 104c that exercises the reversed-phase control, and a selection unit 104a that makes a selection of which of the in-phase control unit 104b and the reversed-phase control unit 104c should exercise control.

Alternating currents whose phases are mutually in phase or in reversed phase flow to the first power transmitting coil 103a and the second power transmitting coil 103b. A combined magnetic field of the first power transmitting coil 103a and the second power transmitting coil 103b becomes an alternating field. The "alternating field" is a magnetic field in which only polarity of a magnetic field vector changes in one cycle of an alternating current when the alternating current is passed. On the other hand, a magnetic field in which, in addition to polarity of a magnetic field vector, the direction thereof changes in one cycle of an alternating current is called a "rotating field". Incidentally, the first power transmitting coil 103a and the second power transmitting coil 103b are assumed to be arranged with different center axes.

The power receiving coil 106 of the power receiving apparatus 2 resonates with a magnetic field obtained by adding a magnetic field generated by each of the first power transmitting coil 103a and the second power transmitting coil 103b. With the power receiving coil 106 being resonated, a magnetic field and an induced current are generated. Power consumed by the load 107 can be supplied by passing an induced current generated in the power receiving coil 106 directly to the load 107 of the power receiving apparatus 2 or passing an induced current generated in a loop or the like magnetically coupled with a magnetic field generated by the power receiving coil 106 to the load 107 of the power receiving apparatus 2.

In the wireless power transmission apparatus 1, as described above, alternating currents whose phases are mutually in phase or in reversed phase flow to the first power transmitting coil 103a and the second power transmitting coil 103b. When alternating currents whose phases are mutually in phase or in reversed phase flow, the sum of magnetic fields generated by the first power transmitting coil 103a and the second power transmitting coil 103b becomes an alternating field. Then, if an alternating field is generated, high power transmission efficiency from the wireless power transmission apparatus 1 to the power receiving apparatus 2 can be achieved regardless of the orientation of the power receiving coil with respect to the power transmitting coils.

The principle on which an alternating field is generated and the reason that high power transmission efficiency can be achieved regardless of the orientation of the power receiving coil with respect to the power transmitting coils when an alternating field is generated will be described below.

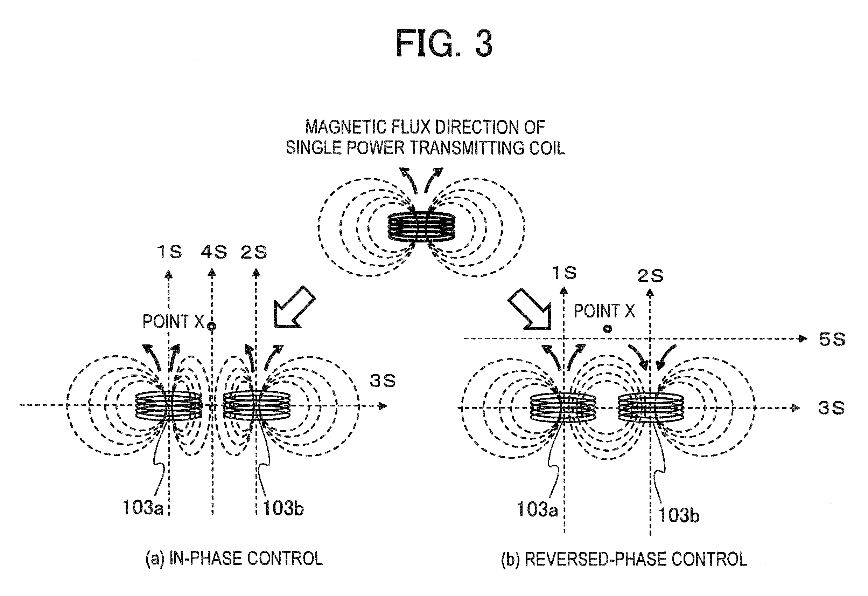

FIG. 3 shows an example of generated magnetic fluxes when the in-phase control and the reversed-phase control of the first power transmitting coil 103a and the second power transmitting coil 103b are exercised. In FIG. 3, a case when two power transmitting coils are arranged so that center axes 1S, 2S thereof are parallel is shown as an example. Incidentally, an example of the magnetic flux generated when there is one power transmitting coil is shown in FIG. 3.

When the in-phase control is exercised as shown in FIG. 3A, the magnetic flux in the direction of a line 4S perpendicular to a line 3S linking centers of the first power transmitting coil 103a and the second power transmitting coil 103b becomes dense. When the reversed-phase control is exercised as shown in FIG. 3B, on the other hand, the magnetic flux in the direction of a line 5S parallel to the line 3S becomes dense.

It is clear from the foregoing that the directions in which the magnetic field is dense are perpendicular to each other when the in-phase control is exercised and when the reversed-phase control is exercised.

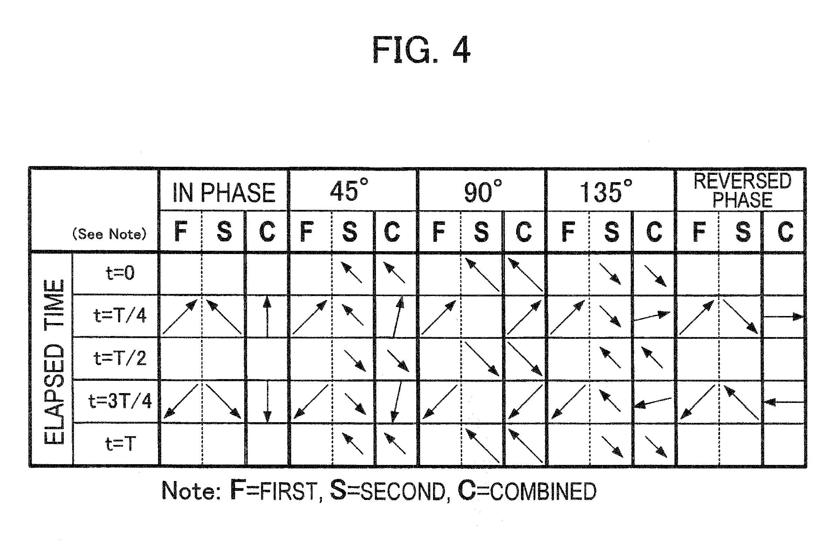

FIG. 4 is a diagram showing examples of the magnetic field vector in a point x in FIG. 3 when the phase difference of alternating currents flowing in the first power transmitting coil 103a and the second power transmitting coil 103b is 0° (in phase), 45°, 90°, 135°, and 180° (reversed phase).

The vertical axis in FIG. 4 represents an elapsed time. The elapsed time shows t=0, T/4, T/2, and T. T is a cycle of the alternating current. The horizontal axis represents a phase difference of alternating currents flowing in the first power transmitting coil 103a and the second power transmitting coil 103b. Cases when the phase difference is 0° (in phase), 45°, 90°, 135°, and 180° (reversed phase) are shown. The horizontal axis also shows the magnetic field vector of a magnetic field generated by the first power transmitting coil 103a, the magnetic field vector of a magnetic field generated by the second power transmitting coil 103b, and a combined magnetic field vector of the combined magnetic field of the magnetic field generated by the first power transmitting coil 103a and the magnetic field vector of the magnetic field generated by the second power transmitting coil 103b for each phase difference.

Focusing on the combined magnetic field vector in FIG. 4, when the phase is in phase or reversed phase, the combined magnetic field vector changes in polarity only over the elapsed time. That is, the magnetic field is understood as an alternating field. When the phase is other than in phase and reversed phase, on the other hand, the combined magnetic field vector changes not only in polarity, but also in direction, that is, the magnetic field is understood as a rotating field

From the foregoing, it is understood that an alternating field is generated when the in-phase control or reversed-phase control is exercised, and directions of the magnetic field vector when the in-phase control is exercised and the magnetic field vector when the reversed-phase control is exercised are different.

The reason why power transmission efficiency is improved by generating an alternating field as described above will be described below.

To improve power transmission efficiency in wireless power transmission using magnetic resonance or the phenomenon of magnetic resonance, it is necessary to increase the number of magnetic fluxes linking the power receiving coil. If an alternating field is generated by fitting to the orientation of the power receiving coil, the number of magnetic fluxes linking the power receiving coil can be increased when compared with a case when a rotating field is generated. As a result, high power transmission efficiency can be achieved regardless of the orientation of the power receiving coil with respect to the power transmitting coils by generating an alternating flux.

Moreover, alternating fluxes in different directions can be generated by the in-phase control or reversed-phase control. Thus, the magnetic flux direction can be controlled at least in two-dimensional directions by switching the in-phase control and the reversed-phase control. Therefore, the orientation dependence in two-dimensional directions of the power receiving coil on the power transmitting coil can be improved.

In the foregoing, a case when there are two power transmitting coils has been described, but there may be three power transmitting coils or more. If there are three power transmitting coils and the center point of each power transmitting coil is not arranged on the same straight line, the magnetic flux direction can be controlled in three-dimensional directions. As a result, the orientation dependence in three-dimensional directions can be improved.

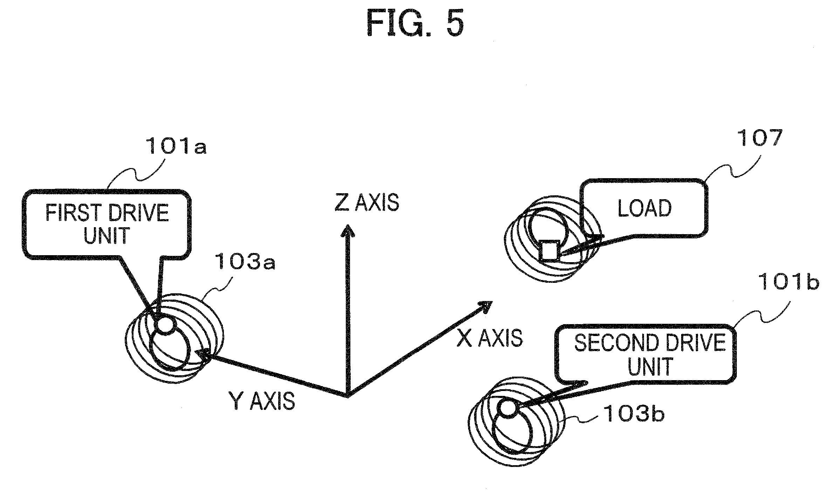

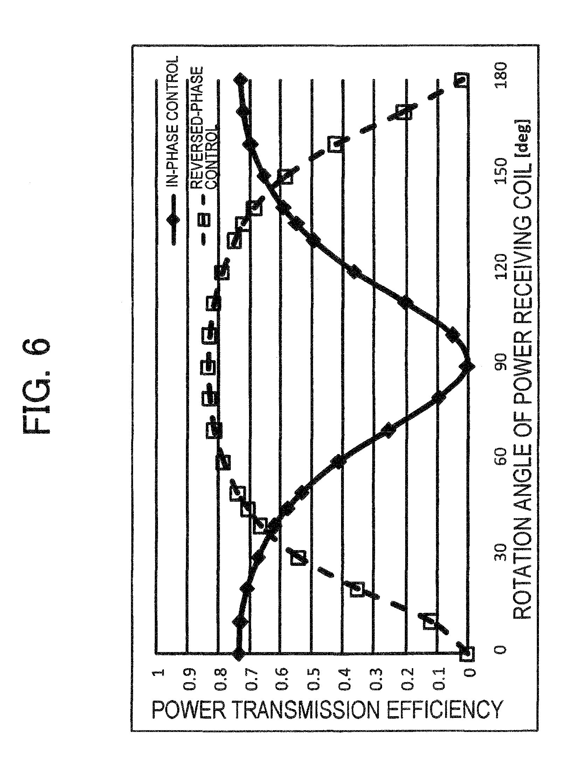

Next, a simulation result of power transmission efficiency when the in-phase control or reversed-phase control of the first power transmitting coil 103a and the second power transmitting coil 103b of the wireless power transmission apparatus 1 is exercised and the angle of the power receiving coil 106 of the power receiving apparatus 2 with respect to the first and second power transmitting coils 103a, 103b is changed will be shown. FIG. 5 shows the physical relationship of the first power transmitting coil 103a, 103b and the power receiving coil 106 of the simulation. FIG. 6 shows a simulation result. The horizontal axis of FIG. 6 is the rotation angle of the power receiving coil. The rotation angle [deg] of the power receiving coil is a rotation angle when rotated counterclockwise around the Z axis in FIG. 5. The power transmission efficiency is determined as a quotient of power consumed by the load 107 and transmission power.

Further details of the simulation are as follows. In the simulation, as shown in FIG. 6 of the horizontal axis of FIG. 6, a one-turn loop (coil) is provided between the first power transmitting coil 103a and the second power transmitting coil 103b, and the first drive unit 101a and the second drive unit 101b. Also, a one-turn loop (second coil) is provided between the power receiving coil 106 and the load 107. The power transmitting/receiving coils 103a, 103b, 106 and the one-turn loop are electromagnetically connected by electromagnetic coupling.

Simulation conditions

| | |
|---|---|
| Power transmitting/receiving coil diameter | 30 cm |
| Power transmitting/receiving coil length | 20 cm |
| Copper wire radius | 3 mm |
| Resonance coil winding number | 5.25 turns |
| Feeding loop diameter | 20 cm |
| Coil-loop distance | 1 cm |
| Power transmitting-receiving coil distance | 60 cm |
| Power transmitting-transmitting coil distance | 1 cm |
| Resonance frequency | 24.9 MHz |

(continued)

| Power receiving coil rotation angle | 0° to 180° |
| power receiving coil load | 50 Ω |

It is evident from FIG. 6 that when the in-phase control and the reversed-phase control are exercised, the power transmission efficiency shows high power transmission efficiency regardless of the rotation angle of power receiving coil 106. That is, by exercising the reversed-phase control when the rotation angle of the power receiving coil is 40° to 140° and the in-phase control when the rotation angle is any other angle based on FIG. 6, the increase or decrease of power transmission efficiency can be reduced to about 20%. That is, the dependence of the power receiving coil 106 on the orientation of the power transmitting coils 103a, 103b can be reduced. From the above result, therefore, high power transmission efficiency can be maintained by switching to the in-phase control or the reversed-phase control in accordance with the rotation angle of the power receiving coil 106.

Incidentally, the physical relationship between the power receiving coil 106 and the first and second power transmitting coils 103a, 103b is not limited to the arrangement in FIG. 5. Any physical relationship in which the first and second power transmitting coils 103a, 103b are not opposite to each other is allowed.

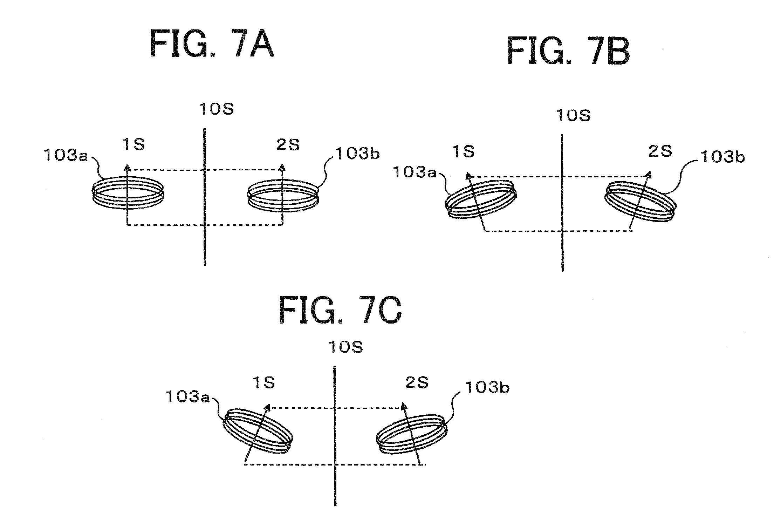

FIG. 7 shows preferable physical relationships between the first power transmitting coil 103a and the second power transmitting coil 103b of the wireless power transmission apparatus 1. As shown in FIG. 7, the first power transmitting coil 103a and the second power transmitting coil 103b preferably have center axes that do not match. Also as shown in FIG. 7, the first power transmitting coil 103a and the second power transmitting coil 103b are preferably arranged so that center axes thereof are linearly symmetrical. By making the center axes thereof linearly symmetrical, the direction of magnetic fluxes can be controlled on a center line 10S between the first and second power transmitting coils 103a, 103b. Particularly, as shown in FIG. 7A, the arrangement in which the center axes of the first power transmitting coil 103a and the second power transmitting coil 103b are parallel is preferable. In this case, the magnetic flux on the center line 10S between the first and second power transmitting coils 103a, 103b becomes denser by exercising the in-phase control and the magnetic flux in a direction perpendicular to the center line 10S between the first and second power transmitting coils 103a, 103b becomes denser by exercising the reversed-phase control.

If, as shown in FIG. 7B, the center axes 1S, 2S of the first and second power transmitting coils 103a, 103b are tilted toward the outside with respect to the center line 10 respectively, the magnetic flux becomes denser in positions away from the center line 10S compared with a case of the arrangement in FIG. 7A in which the center axes 1S, 2S are parallel to the center line 10S.

On the other hand, if, as shown in FIG. 7C, the center axes 1S, 2S of the first and second power transmitting coils 103a, 103b are tilted to the inside with respect to the center line 10 respectively, the effect of the in-phase control or the reversed-phase control manifests itself in positions closer to the center line 10S compared with a case of the arrangement in FIG. 7A in which the center axes 1S, 2S are parallel to the center line 10S. Thus, the position (distance from the center line 10S) where the magnetic flux becomes denser can be changed by tilting the center axes 1S, 2S toward the inside or the outside with respect to the center line 10S. That is, the inclination of the center axes 1S, 2S from the center line 10S may be changed to change the distance from the center line 10S where the magnetic flux becomes denser.

If the arrangement as shown in FIG. 7 is not adopted, the dependence of power transmission efficiency on the orientation of the first and second power transmitting coils 103a, 103b of the power receiving coil 106 can still be improved by performing the in-phase control or the reversed-phase control as long as the first and second power transmitting coils 103a, 103b are in a physical relationship in which center axes thereof do not match.

(First modification)

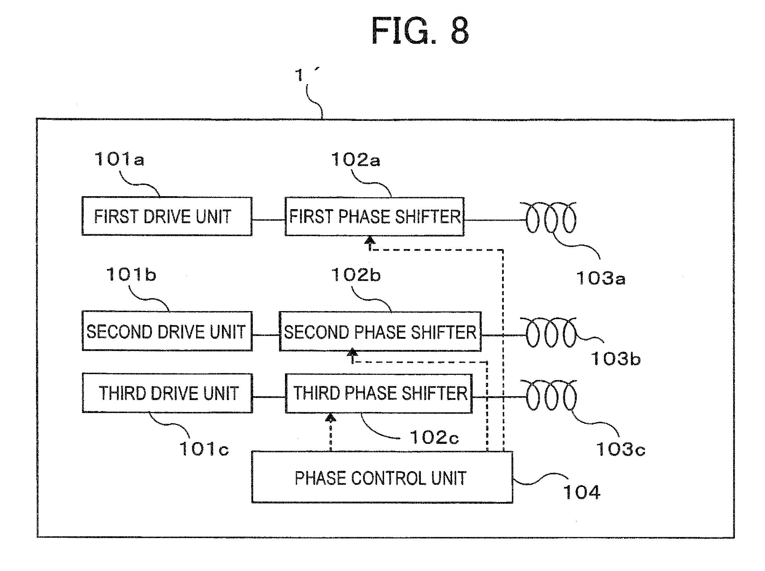

FIG. 8 shows a wireless power transmission apparatus 1 according to a modification of the first embodiment. The wireless power transmission apparatus 1' is configured to further include, in addition to the configuration of the wireless power transmission apparatus according to the first embodiment, a third drive unit 101C, a third phase shifter 102C, and a third power transmitting coil 103C. The third drive unit 101C, the third phase shifter 102C, and the third power transmitting coil 103C are functionally the same as the first drive unit 101A, the first phase shifter 102A, and the first power transmitting coil 103A respectively and thus, a description thereof is omitted.

While the phase control unit 104 exercises the in-phase control or the reversed-phase control of the first power transmitting coil 103a and the second power transmitting coil 103b by the first phase shifter 1002a and the second phase shifter 102b respectively in the first embodiment, the in-phase control or the reversed-phase control of the third power transmitting coil 103c is exercised in relation to the first power transmitting coil 103a and the second power transmitting coil 103b. That is, the control is exercised so that the phases of alternating currents flowing among all three coils of the first power transmitting coil 103a, the second power transmitting coil 103b, and the third power transmitting coil 103c are in phase or in reversed transmission.

According to the wireless power transmission apparatus 1', the dependence of the power receiving coil 106 on the relative orientation in three-dimensional directions can be improved by arranging three power transmitting coils. Moreover, power can be transmitted to a plurality of power receiving coils at the same time.

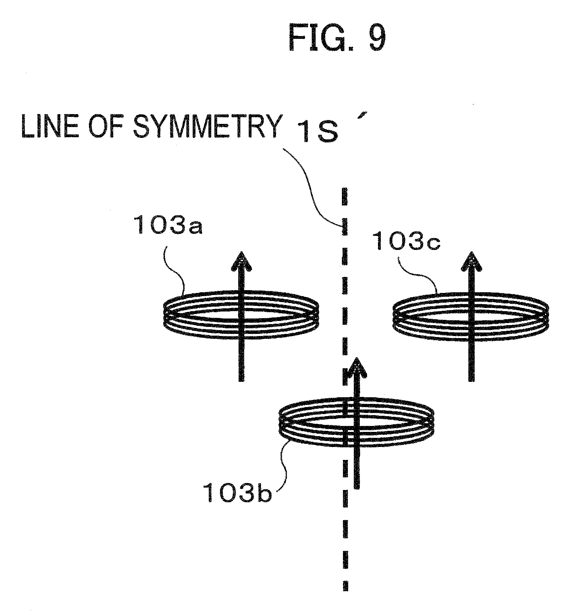

FIG. 9 shows a preferable physical relationship of power transmitting coils of the wireless power transmission apparatus 1'. As shown in FIG. 9, it is preferable to arrange each of the power transmitting coils 103a to 103c so that center axes thereof are linearly symmetrical. In this case, the direction of the magnetic flux can be controlled in three-dimensional directions on a line of symmetry 1S' shown in FIG. 9 by performing the in-phase control or the reversed-phase control over each of the power transmitting coils 103a to 103c. Thus, high power transmission efficiency can be maintained even if the orientation of the power receiving coil 106 is changed to any direction on the line of symmetry 1S'.

Incidentally, the physical relationship of power transmitting coils is not limited to the above relationship. For example, as shown in FIG. 7, the arrangement in which the center axes of the power transmitting coils 103a to 103c are tilted toward the outside or toward the inside with respect to the line of symmetry 1S' may be adopted. The power transmitting coils 103a to 103c have only to be in a physical relationship in which center axes thereof do not match.

A case when the number of power transmitting coils is three is shown in the above modification, but the number of power transmitting coils may be four or more.

<Second embodiment

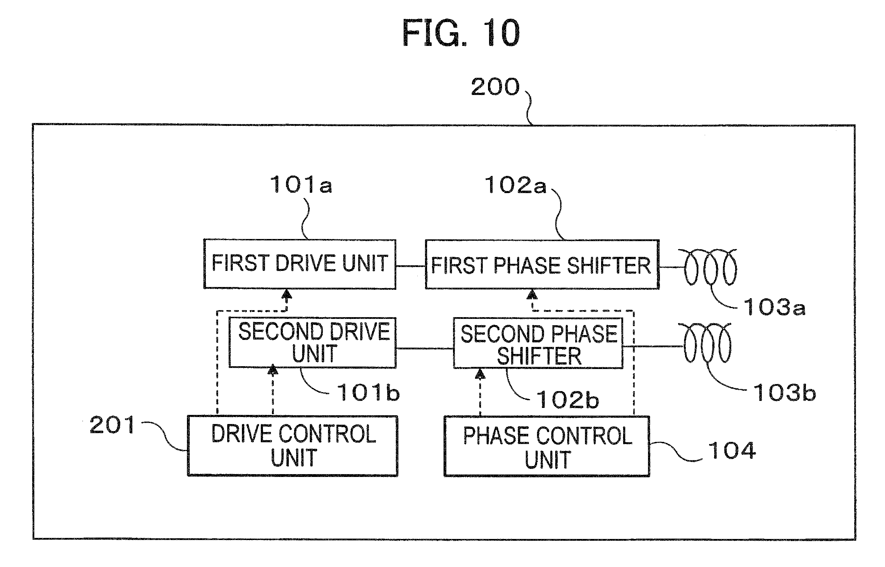

FIG. 10 shows a wireless power transmission apparatus 200 according to the second embodiment. The wireless power transmission apparatus 200 further includes, in addition to the configuration of the wireless power transmission apparatus according to the first embodiment, a drive control unit 201.

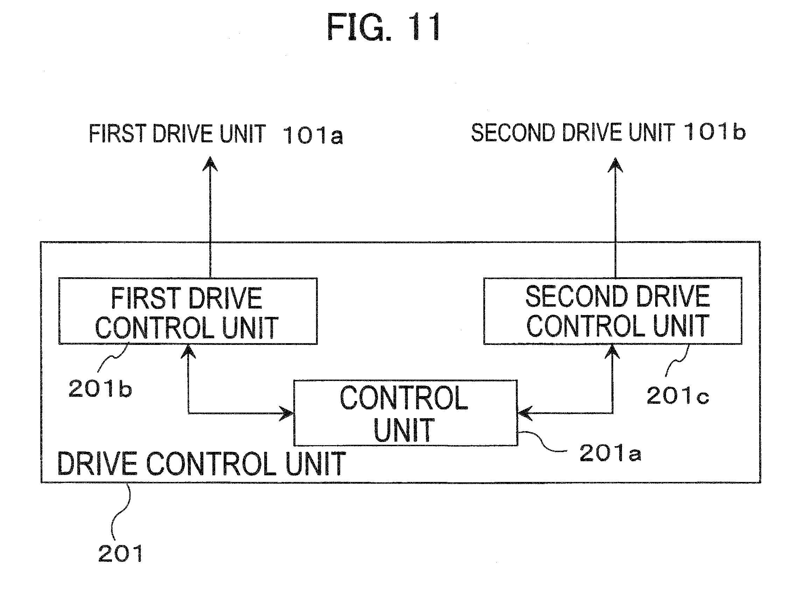

The drive control unit 201 includes, as shown in FIG. 11, a control unit 201a, a first drive control unit 201b, and a second drive control unit 201c. The control unit 201a decides the power transmitting coil to be used for power transmission and the power transmitting coil not to be used for power transmission and instructs the first drive control unit 201b and the second drive control unit 201c whether to pass an alternating current to the first power transmitting coil 103a and the second power transmitting coil 103b respectively. An instruction to pass an alternating current is received, the first drive control unit 201b and the second drive control unit 201c allow the first drive unit 101a and the second drive unit 101b to pass a current if an instruction to pass an alternating current is received and do not allow the first drive unit 101a and the second drive unit 101b to pass a current if an instruction not to pass an alternating current is received.

From the foregoing, the wireless power transmission apparatus 200 has the following four methods of transmitting power:

(1) Transmit power by using only the first power transmitting coil 103a.
(2) Transmit power by using only the second power transmitting coil 103b.
(3) Pass alternating currents to both the first power transmitting coil 103a and the second power transmitting coil 103b and exercise in-phase control.
(4) Pass alternating currents to both the first power transmitting coil 103a and the second power transmitting coil 103b and exercise reversed-phase control.

Power is transmitted by passing an alternating current by any one of the above four methods. A method of switching and using the above four methods will be called "power transmitting coil switching" below. Each method of (1) to (4) will be called a "power transmitting coil switching method".

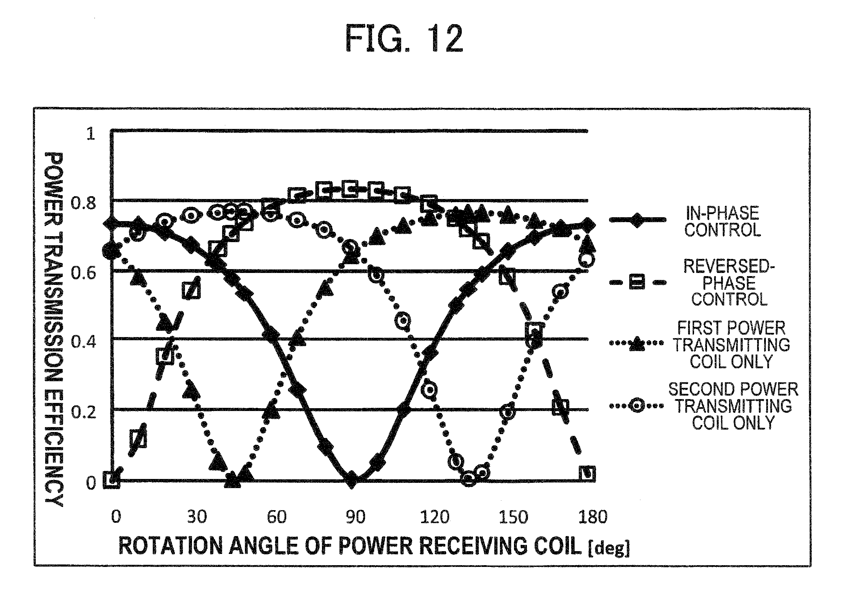

Next, a simulation result of power transmission efficiency when the first power transmitting coil 103a and the second power transmitting coil 103b of the wireless power transmission apparatus 1 are controlled by switching the above four methods and the angle of the power receiving coil 106 of the power receiving apparatus 2 to the first and second power transmitting coils 103a, 103b is changed will be shown. Incidentally, simulation conditions and the physical relationship of the power receiving coil are assumed to be same as those described in the first embodiment. FIG. 12 shows a simulation result.

It is evident from FIG. 6 that when the above four methods are switched to control power transmitting coils, still higher power transmission efficiency compared with the simulation in the first embodiment, high power transmission efficiency regardless of the rotation angle of the power receiving coil 106 are achieved. That is, from FIG. 6, control is exercised by the method of (3) of the above four methods when the rotation angle of the power receiving coil is 0° to 10° and 170° to 180°, by the method of (2) when the rotation angle is 10° to 50°, by the method of (4) when the rotation angle is 50° to 130°, and by the method of (1) when the rotation angle is 30° to 170°.

It is understood that the increase or decrease of power transmission efficiency can be reduced to about 10% by exercising control as described above. That is, the dependence of the power receiving coil 106 on the orientation of the power transmitting coils 103a, 103b can be reduced. Therefore, it is clear from the above result that high power transmission efficiency can be maintained by switching the four methods in accordance with the rotation angle of the power receiving coil 106.

Incidentally, the physical relationship between the power receiving coil 106 and the first and second power transmitting coils 103a, 103b is not limited to the arrangement in FIG. 5.

The number of power transmitting coils may be three or more, instead of two. In such a case, if the number of power transmitting coils is N, the number of power transmitting coil switching methods is the sum of N methods using a respective single power transmitting coil and all combinations when a plurality of power transmitting coils is combined and used:

$$N + \sum_{k=2}^{N} 2^k \cdot {}_N C_k \qquad \text{(Formula 1)}$$

<Third embodiment>

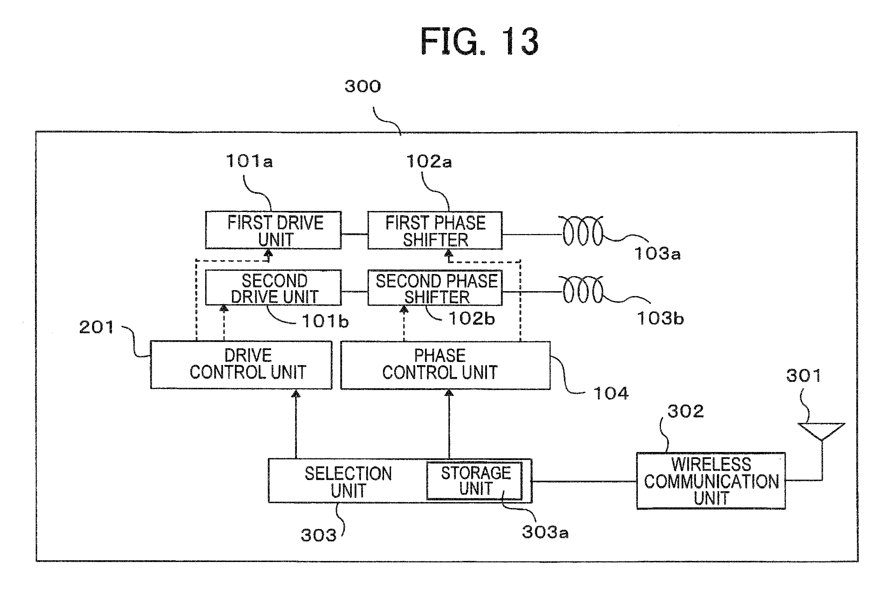

FIG. 13 shows a wireless power transmission apparatus 300 according to the third embodiment. The wireless power transmission apparatus 300 further includes, in addition to the configuration of the wireless power transmission apparatus according to the second embodiment, an antenna 301, a wireless communication unit 302, and a selection unit 303. The selection unit 303 includes a storage unit 303a.

The wireless communication unit 302 receives parameter information when the power transmitting coil switching method (methods of 1 to 4 described above) described in the second embodiment is decided from the power receiving apparatus 2 through the antenna 301. The parameter information is, for example, information about the amount of received power received by the power receiving apparatus 2 or the position and orientation of the power receiving coil of the power receiving apparatus 2. Information about the amount of received power is assumed below. The wireless communication unit 302 receives information about the amount of received power notified from the power receiving apparatus 2 through a wireless signal. The amount of received power is, for example, power consumed by the load 107 attached outside the power receiving apparatus 2. When determining the amount of received power by each of the four methods in the present embodiment, transmission power of the wireless power transmission apparatus 300 is assumed to be the same power for each of the four methods.

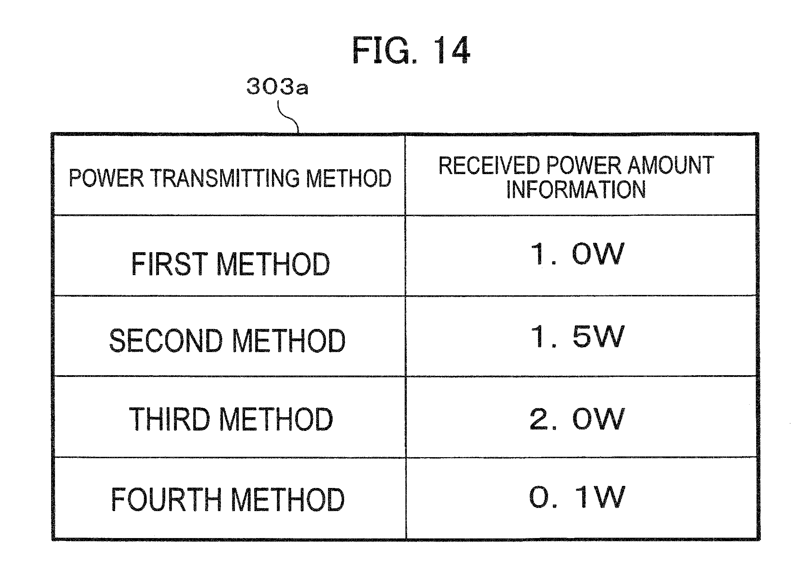

The selection unit 303 selects one method from four methods of the power transmitting coil switching methods based on information about the amount of received power. For example, the selection unit 303 selects the method of the largest amount of received power. The selection unit 303 includes the storage unit 303a. The storage unit 303a stores information about the amount of received power received by the wireless communication unit 302. FIG. 14 shows an internal configuration of the storage unit 303a. The storage unit 303a stores information about the amount of received power by power transmitting method (power transmitting coil switching method). In FIG. 14, for example, 1.0 W is stored for the first method, 1.5 W for the second method, 2.0 W for the third method, and 0.1 W for the fourth method as information about the amount of received power.

After storing information about the amount of received power for all power transmitting methods (power transmitting coil switching methods) in the storage unit 303a, the selection unit 303 selects a power transmitting coil switching method based on the information.

A concrete operation method of the wireless power transmission apparatus 300 will be described below.

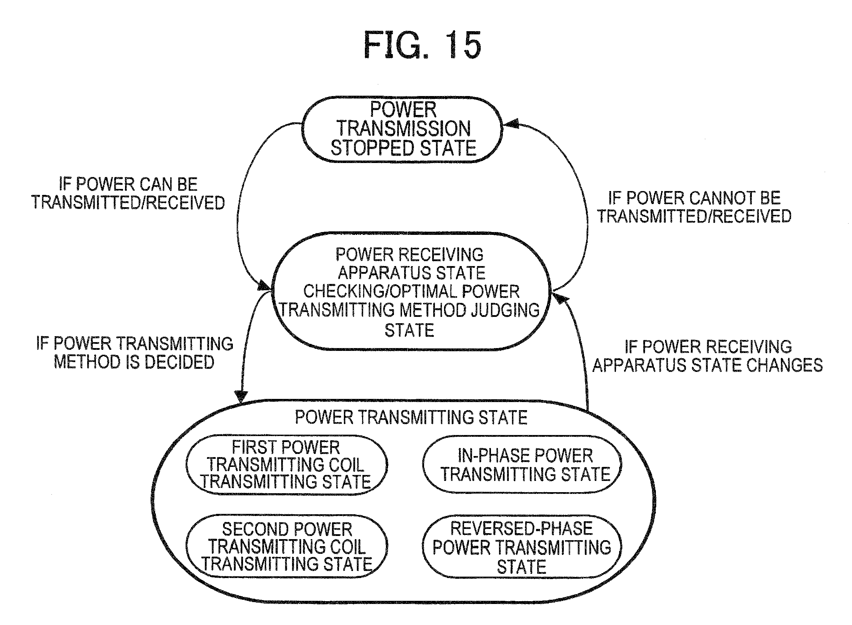

FIG. 15 is a state transition diagram of a wireless power transmission apparatus 400. The wireless power transmission apparatus 400 makes transitions between three states of a power transmission stopped state, a power receiving apparatus state checking/optimal power transmitting method judging state, and a power transmitting state. The power transmitting state can take four states of the above power transmitting coil switching methods (1) to (4).

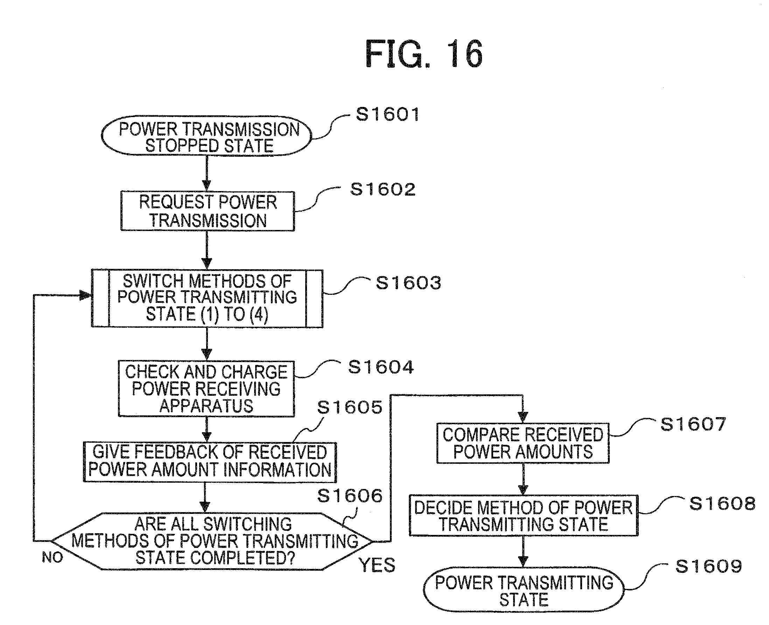

FIG. 16 is a flow chart showing an example of a procedure for deciding the power transmitting coil switching method of the wireless power transmission apparatus 300. The initial state is a power transmission stopped state (S1601). If a power transmission request is received from the power receiving apparatus 2, the wireless power transmission apparatus 300 makes a transition to the power receiving apparatus state checking/optimal power transmitting method judging state shown in FIG. 15. If the transition to this state occurs, the power transmitting coil is first switched to the power transmitting coil switching method (1) (S1603). That is, an alternating current is passed to the first power transmitting coil 103a by the drive unit 101a being caused to pass a current by the first drive control unit 201b of the drive control unit 201.

On the other hand, the second drive control unit 201c does not allow the second drive unit 101b to pass a current. Thus, no alternating current is passed to the second power transmitting coil 103b. Power is transmitted to the power receiving apparatus 2 by the method of the power transmitting coil switching method (1) and the power receiving apparatus 2 is check-charged (S1604). The power receiving apparatus 2 measures the amount of received power in the current state of the power receiving apparatus 2 by check-charging and gives feedback of information about the amount of received power to the power transmitting apparatus (1605). When the information about the amount of received power is received by the wireless communication unit 302, the wireless power transmission apparatus 300 stores the information in the storage unit 303a. The wireless power transmission apparatus 300 tries all the four power transmitting coil switching methods under the control of the drive control unit 201 and the phase control unit 103.

If information about the amounts of received power of all the four power transmitting coil switching methods is acquired and stored in the storage unit 302a (S1606, YES), the selection unit 303 compares the amounts of received power based on the information about the amounts of received power (S1607) to select the power transmitting coil switching method that achieves the maximum amount of received power or the maximum power transmission efficiency calculated from the amount of received power (S1608). In the table shown in FIG. 14, the amount of received power by the third method is the largest. It is assumed, as described above, that transmission power of the wireless power transmission apparatus 300 is constant for each of the four methods. Thus, in this case, the power transmission efficiency of the third method becomes the largest. Therefore, in this case, the third method is selected. In the present embodiment, an example in which transmission power of the wireless power transmission apparatus 300 is constant for the four methods is shown. However, transmission power may not be assumed to be constant. In such a case, power transmission efficiency of each of the four methods is determined by dividing the amount of received power by each method by transmission power by each method.

If the selection unit 303 selects the power transmitting coil switching method, a transition from the power receiving apparatus state checking/optimal power transmitting method judging state to the power transmitting state to really transmit power by the selected power transmitting coil switching method (S1609).

The procedure for deciding the power transmitting coil switching method described in the above example is described for the case when the number of power transmitting coils is two. However, this decision procedure can also be applied when three power transmitting coils or more are used. The number of power transmitting coil switching methods increases, as shown by (Formula 1) described in the second embodiment, proportional to the number of power transmitting coils. If the number thereof is three, the number of power transmitting coil switching methods tried in S1603 increases. Therefore, if the number of power transmitting coils is three or more, particularly if the number of power transmitting coils is large, it is preferable to use the following method to select the power transmitting coil switching method.

According to the method, information about the amount of received power is first checked by driving and check-charging by a single power transmitting coil of power transmitting coil switching methods. Next, the selection unit 303 judges whether the information about the amount of received power when driven by each single power transmitting coil is larger than a threshold. Next, the power transmitting coil switching methods are tried by trying the in-phase control or the reversed-phase control by using only power transmitting coils whose information about the amount of received power is larger than the threshold.

By trying the power transmitting coil switching methods by using power transmitting coils whose information about the amount of received power is larger than the threshold and not trying the power transmitting coil switching methods by using power transmitting coils whose information about the amount of received power is smaller than the threshold in this manner, the number of trials needed to decide the power transmitting coil switching method can be reduced.

For example, the average value or the median of information about the amount of received power when each power transmitting coil is used as the above threshold. The selection unit 303 determines the average value or the median of information about the amount of received power from the information about the amount of received power when each power transmitting coil is used stored in the storage unit 303a.

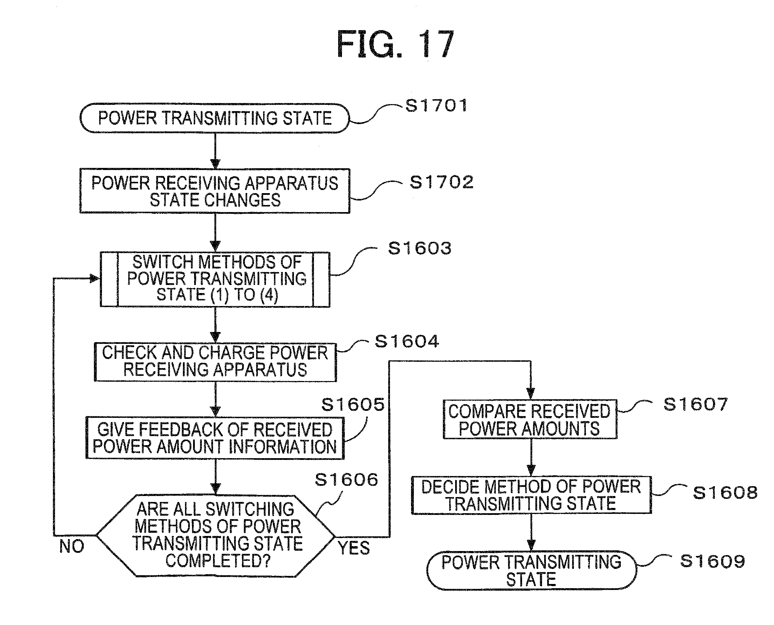

FIG. 17 is a flow chart showing another example of the procedure for deciding the power transmitting coil switching method of the wireless power transmission apparatus 300. The flow chart in FIG. 17 is different from the flow chart in FIG. 16 in that the initial state is a state in which power is being transmitted. In the decision procedure in FIG. 17, if any change of the state of the power receiving apparatus is detected (S1702) while power being transmitted (S1701), the procedure from S1603 to S1609 is performed. A change of the state of the power receiving apparatus is, for example, a case when the position or the angle of the power receiving apparatus 2 with respect to the wireless power transmission apparatus 300 changes.

According to the wireless power transmission apparatus 300 described above, the power transmitting coil switching methods are tried and power is transmitted by selecting the power transmitting coil switching method whose information about the amount of received power is large and thus, high power transmission efficiency can be achieved. If the number of power transmitting coils is two, there are four power transmitting coil switching methods in all and thus, the power transmitting coil switching method with high power transmission efficiency can be selected while the load of the wireless power transmission apparatus 300 being reduced.

If the number of power transmitting coils is three or more, the power transmitting coil switching methods by single power transmitting coils are tried and then, the power transmitting coil switching methods are tried by using power transmitting coils whose information about the amount of received power is larger than the threshold and thus, the number of tried power transmitting coil switching methods can be reduced. As a result, the power transmitting coil switching method with high power transmission efficiency can be selected while the load of the wireless power transmission apparatus 300 being reduced.

Also according to the wireless power transmission apparatus 300, effects similar to the effects of the wireless power transmission apparatus according to the first embodiment can be achieved.

<Fourth embodiment>

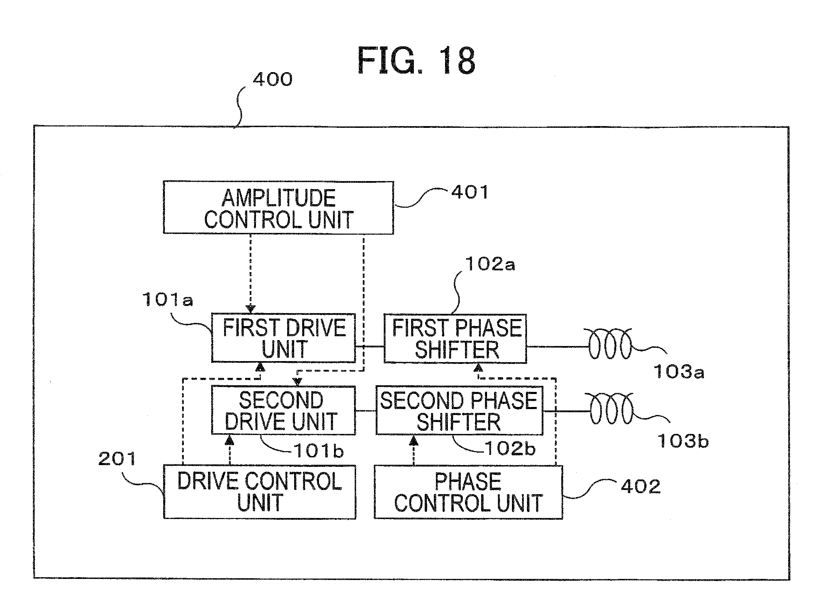

FIG. 18 shows a wireless power transmission apparatus 400 according to the fourth embodiment. The wireless power transmission apparatus 400 further includes, in addition to the configuration of the wireless power transmission apparatus according to the first embodiment, an amplitude control unit 401. The amplitude control unit 401 controls the amplitude of alternating currents flowing to the first power transmitting coil 103a and the second power transmitting coil 103b after being output by the first drive unit 101a and the second drive unit 101b. In contrast to the phase control unit in the first embodiment, a phase control unit 402 performs not only the in-phase control or the reversed-phase control, but also the control a phase difference between the first phase of the first power transmitting coil 103a and the second phase of the second power transmitting coil to any phase difference.

The wireless power transmission apparatus 400 decides whether to pass alternating currents to the first power transmitting coil 103a and the second power transmitting coil 103b through the drive control unit 201 and controls the first drive unit 101a and the second drive unit 101b. The wireless power transmission apparatus 400 also decides relative amplitudes of alternating currents through the amplitude control unit 401 and controls the first drive unit 101a and the second drive unit 101b. Then, a phase control unit 404 controls the phases of alternating currents output by the first drive unit 101a and the second drive unit 101b. The phase control unit 404 controls the first phase shifter 102a and the second phase shifter 102b so that a decided phase difference is obtained.

Thus, in the wireless power transmission apparatus 400, alternating currents having different amplitudes and different phases flow into the first power transmitting coil 103a and the second power transmitting coil 103b.

FIG. 17 shows magnetic fluxes generated by the first power transmitting coil 103a and the second power transmitting coil 103b in the wireless power transmission apparatus 400 in a position of the power receiving coil 106.

It is preferable to generate a magnetic flux in the position of the power receiving coil 106 in the same direction as a center axis 6S of the power receiving coil 106 to achieve high power transmission efficiency.

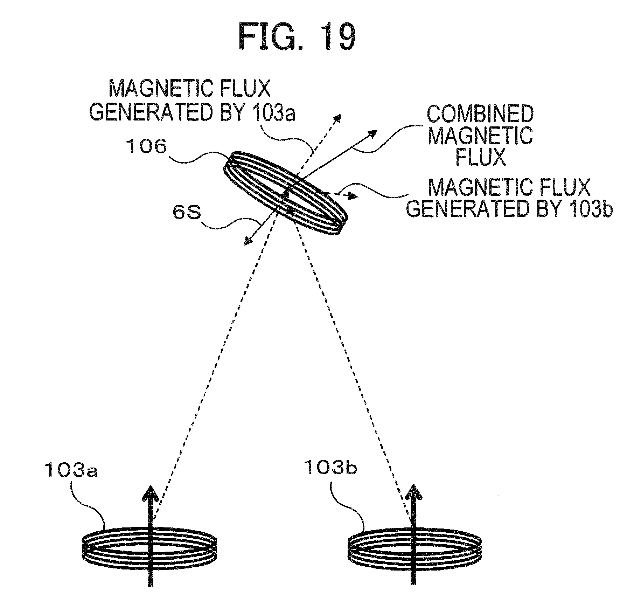

The wireless power transmission apparatus 400 can control the orientation and magnitude of a magnetic flux by controlling the relative phase difference and amplitude of alternating currents flowing into the first power transmitting coil 103a and the second power transmitting coil 103b. As shown in FIG. 109, the magnetic flux vector generated by the first power transmitting coil 13a in the position of the power receiving coil 106 is larger than the magnetic flux vector generated by the second power transmitting coil 103b in the position of the power receiving coil 106. As a result, the generated combined magnetic flux vector is as shown in FIG. 19. Thus, a combined magnetic flux vector can be generated in various positions of the power receiving coil 106 by controlling the phase difference and amplitude.

As a result, a magnetic flux with the maximum power transmission efficiency regarding the relative physical relationship and the relative coil orientation of transmitting and receiving coils can be generated by controlling the phase difference and amplitude. As a result, the dependence on the relative physical relationship and orientation between transmitting and receiving coils can be improved.

In the foregoing, the first to fourth embodiments have been described by taking cases when the number of power transmitting coils is two or three as examples, but the number thereof may be four or more.

In the first to fourth embodiments, the first drive unit, the second drive unit, and the third drive unit are configured to be provided separately, but may be integrally configured. Also in first to fourth embodiments, the first phase shifter, the second phase shifter, and the third phase shifter are configured to be provided separately, but may be integrally configured.

Technology in the first to fourth embodiments can be applied to wireless communication using a field radiation antenna such as a loop antenna.

By using technology in the first to fourth embodiments, a magnetic flux or a magnetic field in a specific direction can be not only strengthened, but also weakened. Thus, the technology in the first to fourth embodiments can weaken a magnetic flux for devices causing a magnetic field interference problem when electromagnetic interference occurs.

The present invention is not limited to the above embodiments in the current forms and can be embodied by modifying elements in various ways without deviating from the scope thereof in the stage of working. Also, various inventions can be formed by appropriately combining a plurality of elements disclosed by the above embodiments. For example, some elements may be deleted from all elements shown in an embodiment. Further, elements in different embodiments may appropriately be combined.

REFERENCE SIGNS LIST

1, 1', 200, 300, 400: Wireless power transmission apparatus; 2: Power receiving apparatus; 101a: First drive unit; 101b: Second drive unit; 101c: Third drive unit; 102a: First phase shifter; 102b: Second phase shifter; 102c: Third phase shifter; 103a: First power transmitting coil; 103b: Second power transmitting coil; 103c: Third power transmitting coil; 104, 402: Phase control unit; 106: Power receiving coil; 107: Load; 104a, 303: Selection unit; 104b: In-phase control unit; 104c: Reversed-phase control unit; 201: Drive control unit; 201a: Control unit; 201b: First drive control unit; 201c: Second drive control unit; 301: Antenna; 302: Wireless communication unit; 303a: Storage unit; 401: Amplitude control unit

**Claims**

1.  (Original) A wireless power transmission apparatus, comprising;
    a drive unit that outputs an alternating current;
    a phase shifter that controls a phase of the alternating current;
    a first power transmitting coil that generates a magnetic field by a first alternating current made to flow therethrough, the phase of the first alternating current being controlled by the phase shifter;
    a second power transmitting coil that has a center axis thereof arranged in a position different from the position of the center axis of the first power transmitting coil, generates the magnetic field by a second alternating current made to flow therethrough, the phase of the second alternating current being controlled by the phase shifter; and
    a phase control unit that controls the phase shifter so that a first phase of the first alternating current and a second phase of the second alternating current are in phase or reversed phase.

2.  The wireless power transmission apparatus according to claim 1, further comprising a drive control unit that controls whether the drive unit outputs the alternating current to the first power transmitting coil and whether the drive unit outputs the alternating current to the second power transmitting coil.

3.  The wireless power transmission apparatus according to claim 2, wherein
    the magnetic field is generated by trying four methods including a first method that generates the magnetic field by passing the alternating current to only the first power transmitting coil, a second method that generates the magnetic field by passing the alternating current to only the second power transmitting coil, a third method that generates the magnetic field by passing the alternating currents whose first phase and second phase are in phase to both the first power transmitting coil and the second power transmitting coil, and a fourth method that generates the magnetic field by passing the alternating currents whose first phase and second phase are in reversed phase to both the first power transmitting coil and the second power transmitting coil and
    an amount of received power of the power receiving apparatus is determined for each of the four methods and one of the four methods is selected based on the four amounts of received power to generate the magnetic field.

4.  The wireless power transmission apparatus according to claim 2, further comprising:

    a third power transmitting coil that generates the magnetic field by a current being passed, wherein
    the phase control unit controls the phase shifter so that a third phase of the alternating current flowing in the third power transmitting coil is in phase or in reversed phase with one of the first phase and the second phase,
    the drive control unit further controls whether the drive unit outputs the alternating current to the third power transmitting coil,
    the magnetic field is generated by trying a first method that generates the magnetic field by passing the current to the first power transmitting coil only, a second method that generates the magnetic field by passing the current to the second power transmitting coil only, and a third method that generates the magnetic field by passing the current to the third power transmitting coil only to transmit power by causing a power receiving apparatus coil of an external power receiving apparatus to pass the current, and
    an amount of received power of the power receiving apparatus is determined for each of the three methods and, if the power transmitting coil used for the method by which the amount of received power is smaller than a threshold of the three methods is the first power transmitting coil, the magnetic field is generated by trying two methods including a fourth method that generates the magnetic field by passing the alternating currents whose second phase and third phase are in phase to both the second power transmitting coil and the third power transmitting coil, and a fifth method that generates the magnetic field by passing the alternating currents whose second phase and third phase are in reversed phase to both the second power transmitting coil and the third power transmitting coil to transmit, the power by causing the power receiving apparatus coil of the external power receiving apparatus to pass the current and the amount of received power of the power receiving apparatus is determined for each case, and
one of four methods of the second method, the third method, the fourth method, and the fifth method is selected based on the amounts of received power of the four methods to generate the magnetic field.

**5.** (Original) A wireless power transmission apparatus, comprising:

a drive unit that outputs an alternating current;
an amplitude control unit that controls an amplitude of the alternating current;
a phase shifter that controls a phase of the alternating current;
a first power transmitting coil that generates a magnetic field by a first alternating current made to flow therethrough, the phase of the first alternating current being controlled by the phase shifter and the amplitude of the first alternating current being controlled by the amplitude control unit;
a second power transmitting coil that has a center axis thereof arranged in a position different from the position of the center axis of the first power transmitting coil, generates the magnetic field by a second alternating current made to flow therethrough, the phase of the second alternating current being controlled by the phase shifter and the amplitude of the second alternating current being controlled by the amplitude control unit; and
a phase control unit that controls the phase shifter so that a phase difference between a first phase of the first alternating current and a second phase of the second alternating current becomes a first phase difference.

**Amended claims under Art. 19.1 PCT**

**1.** (amended) A wireless power transmission apparatus, comprising:

a drive unit that outputs an alternating current;
a phase shifter that controls a phase of the alternating current;
a first power transmitting coil that generates a magnetic field by a first alternating current made to flow therethrough, the phase of the first alternating current being controlled by the phase shifter;
a second power transmitting coil that has a center axis thereof arranged in a position different from the position of the center axis of the first power transmitting coil and linearly symmetrically to the center axis of the first power transmitting coil and generates the magnetic field by a second alternating current made to flow therethrough, the phase of the second alternating current being controlled by the phase shifter; and
a phase control unit that controls the phase shifter so that a first phase of the first alternating current and a second phase of the second alternating current are in phase or reversed phase.

**2.** The wireless power transmission apparatus according to claim 1, further comprising a drive control unit that controls whether the drive unit outputs the alternating current to the first power transmitting coil and whether the drive unit outputs the alternating current to the second power transmitting coil.

**3.** The wireless power transmission apparatus according to claim 2, wherein
the magnetic field is generated by trying four methods including a first method that generates the magnetic field by passing the alternating current to only the first power transmitting coil, a second method that generates the magnetic field by passing the alternating current to only the second power transmitting coil, a third method that generates the magnetic field by passing the alternating currents whose first phase and second phase are in phase to both the first power transmitting coil and the second power transmitting coil, and a fourth method that generates the magnetic field by passing the alternating currents whose first phase and second phase are in reversed phase to both the first power transmitting coil and the second power transmitting coil and
an amount of received power of the power receiving apparatus is determined for each of the four methods and one of the four methods is selected based on the four amounts of received power to generate the magnetic field.

**4.** The wireless power transmission apparatus according to claim 2, further comprising:
a third power transmitting coil that generates the magnetic field by a current being passed, wherein
the phase control unit controls the phase shifter so that a third phase of the alternating current flowing in the third power transmitting coil is in phase or in reversed phase with one of the first phase and the second phase,
the drive control unit further controls whether the drive unit outputs the alternating current to the third power transmitting coil,
the magnetic field is generated by trying a first method that generates the magnetic field by passing the current to the first power transmitting coil only, a second method that generates the magnetic field by passing the current to the second power transmitting coil only, and a third method that generates the magnetic field by passing the current to the third power transmitting coil only to transmit power by causing a power receiving apparatus coil of an external power receiving apparatus to pass the current, and

an amount of received power of the power receiving apparatus is determined for each of the three methods and, if the power transmitting coil used for the method by which the amount of received power is smaller than a threshold of the three methods is the first power transmitting coil, the magnetic field is generated by trying two methods including a fourth method that generates the magnetic field by passing the alternating currents whose second phase and third phase are in phase to both the second power transmitting coil and the third power transmitting coil, and a fifth method that generates the magnetic field by passing the alternating currents whose second phase and third phase are in reversed phase to both the second power transmitting coil and the third power transmitting coil to transmit the power by causing the power receiving apparatus coil of the external power receiving apparatus to pass the current and the amount of received power of the power receiving apparatus is determined for each case, and one of four methods of the second method, the third method, the fourth method, and the fifth method is selected based on the amounts of received power of the four methods to generate the magnetic field.

**5.** (amended) A wireless power transmission apparatus, comprising:
a drive unit that outputs an alternating current;
an amplitude control unit that controls an amplitude of the alternating current;
a phase shifter that controls a phase of the alternating current;
a first power transmitting coil that generates a magnetic field by a first alternating current made to flow therethrough, the phase of the first alternating current being controlled by the phase shifter and the amplitude of the first alternating current being controlled by the amplitude control unit;
a second power transmitting coil that has a center axis thereof arranged in a position different from the position of the center axis of the first power transmitting coil and generates the magnetic field by a second alternating current made to flow therethrough, the phase of the second alternating current being controlled by the phase shifter and the amplitude of the second alternating current being controlled by the amplitude control unit; and
a phase control unit that controls the phase shifter so that a phase difference between a first phase of the first alternating current and a second phase of the second alternating current becomes a first phase difference.

# FIG. 1

# FIG. 2

FIRST PHASE SHIFTER 102a    SECOND PHASE SHIFTER 102b

FIRST PHASE SHIFTER 102a    SECOND PHASE SHIFTER 102b

IN-PHASE CONTROL UNIT

REVERSED-PHASE CONTROL UNIT

104b

104c

SELECTION UNIT

104a

PHASE CONTROL UNIT

104

EP 2 518 861 A1

# FIG. 3

MAGNETIC FLUX DIRECTION OF
SINGLE POWER TRANSMITTING COIL

1S 4S 2S

POINT X

3S

103a 103b

(a) IN-PHASE CONTROL

1S 2S

POINT X

5S

3S

103a 103b

(b) REVERSED-PHASE CONTROL

# FIG. 4

| ELAPSED TIME (See Note) | IN PHASE | | | 45° | | | 90° | | | 135° | | | REVERSED PHASE | | |
|---|---|---|---|---|---|---|---|---|---|---|---|---|---|---|---|
| | F | S | C | F | S | C | F | S | C | F | S | C | F | S | C |
| t=0 | | | | | ↗ | ↗ | ↗ | ↗ | | | ↘ | ↘ | | | |
| t=T/4 | ↗ | ↗ | ↑ | ↗ | ↗ | ↑ | ↗ | ↗ | ↗ | ↗ | ↘ | → | ↗ | ↘ | → |
| t=T/2 | | | | | ↘ | ↘ | | ↗ | ↗ | ↗ | ↗ | | | | |
| t=3T/4 | ↗ | ↘ | ↓ | ↗ | ↘ | ↘ | ↗ | ↗ | ↘ | ↗ | ↖ | ↖ | ↗ | ↘ | ← |
| t=T | | | | | ↗ | ↘ | ↗ | ↗ | | | ↘ | ↘ | | | |

Note: **F**=FIRST, **S**=SECOND, **C**=COMBINED

EP 2 518 861 A1

# FIG. 5

EP 2 518 861 A1

# FIG. 6

EP 2 518 861 A1

# FIG. 7A

10S

1S            2S

103a            103b

# FIG. 7B

10S

1S            2S

103a            103b

# FIG. 7C

10S

1S            2S

103a            103b

# FIG. 8

# FIG. 9

LINE OF SYMMETRY 1S

103a

103c

103b

EP 2 518 861 A1

# FIG. 10

# FIG. 11

FIRST DRIVE UNIT 101a

SECOND DRIVE UNIT 101b

FIRST DRIVE CONTROL UNIT

201b

CONTROL UNIT

201a

SECOND DRIVE CONTROL UNIT

201c

DRIVE CONTROL UNIT

201

EP 2 518 861 A1

# FIG. 12

EP 2 518 861 A1

# FIG. 13

300

| | |
|---|---|
| 101a | 102a |
| FIRST DRIVE UNIT | FIRST PHASE SHIFTER |

103a

| | |
|---|---|
| SECOND DRIVE UNIT | SECOND PHASE SHIFTER |
| 101b | 102b |

103b

201

| DRIVE CONTROL UNIT | PHASE CONTROL UNIT |
|---|---|

104

301

302

| SELECTION UNIT | STORAGE UNIT |
|---|---|

303                303a

WIRELESS COMMUNICATION UNIT

# FIG. 14

303a

| POWER TRANSMITTING METHOD | RECEIVED POWER AMOUNT INFORMATION |
|---|---|
| FIRST METHOD | 1. 0W |
| SECOND METHOD | 1. 5W |
| THIRD METHOD | 2. 0W |
| FOURTH METHOD | 0. 1W |

EP 2 518 861 A1

# FIG. 15

EP 2 518 861 A1

# FIG. 16

```
            POWER TRANSMISSION  ───── S1601
              STOPPED STATE
                   │
                   ▼
             REQUEST POWER       ───── S1602
             TRANSMISSION
                   │
                   ▼
            SWITCH METHODS OF    ───── S1603
            POWER TRANSMITTING
             STATE (1) TO (4)
                   │
                   ▼
            CHECK AND CHARGE     ───── S1604
            POWER RECEIVING
              APPARATUS
                   │
                   ▼
       GIVE FEEDBACK OF RECEIVED ───── S1605
       POWER AMOUNT INFORMATION
                   │
                   ▼
              ARE ALL SWITCHING       S1606
          METHODS OF POWER TRANSMITTING
             STATE COMPLETED?
        NO                        YES
```

S1607 — COMPARE RECEIVED POWER AMOUNTS

S1608 — DECIDE METHOD OF POWER TRANSMITTING STATE

S1609 — POWER TRANSMITTING STATE

EP 2 518 861 A1

# FIG. 17

POWER TRANSMITTING STATE — S1701

↓

POWER RECEIVING APPARATUS STATE CHANGES — S1702

↓

SWITCH METHODS OF POWER TRANSMITTING STATE (1) TO (4) — S1603

↓

CHECK AND CHARGE POWER RECEIVING APPARATUS — S1604

↓

GIVE FEEDBACK OF RECEIVED POWER AMOUNT INFORMATION — S1605

↓

S1606 — ARE ALL SWITCHING METHODS OF POWER TRANSMITTING STATE COMPLETED?

NO → (back to S1603)

YES → COMPARE RECEIVED POWER AMOUNTS — S1607

↓

DECIDE METHOD OF POWER TRANSMITTING STATE — S1608

↓

POWER TRANSMITTING STATE — S1609

EP 2 518 861 A1

# FIG. 18

400

| AMPLITUDE CONTROL UNIT | 401 |

101a → FIRST DRIVE UNIT — 102a FIRST PHASE SHIFTER — 103a

SECOND DRIVE UNIT 101b — SECOND PHASE SHIFTER 102b — 103b

201 DRIVE CONTROL UNIT — PHASE CONTROL UNIT 402

EP 2 518 861 A1

# FIG. 19

EP 2 518 861 A1

## INTERNATIONAL SEARCH REPORT

| International application No. |
| --- |
| PCT/JP2009/007196 |

**A. CLASSIFICATION OF SUBJECT MATTER**
*H02J17/00*(2006.01)i

According to International Patent Classification (IPC) or to both national classification and IPC

**B. FIELDS SEARCHED**

Minimum documentation searched (classification system followed by classification symbols)
H02J17/00, A61B1/00

Documentation searched other than minimum documentation to the extent that such documents are included in the fields searched
| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2008-283789 A (Olympus Corp.), 20 November 2008 (20.11.2008), paragraphs [0016] to [0023], [0041], [0053] to [0068]; fig. 1, 4 (Family: none) | 1-5 |
| Y | JP 2008-283791 A (Olympus Corp.), 20 November 2008 (20.11.2008), paragraphs [0010], [0011], [0058] to [0065]; fig. 7 (Family: none) | 1-5 |
| A | JP 2008-301645 A (Sanyo Electric Co., Ltd.), 11 December 2008 (11.12.2008), paragraphs [0003] to [0006]; fig. 12 & US 2008/0298100 A1 | 1-5 |

☐ Further documents are listed in the continuation of Box C.　　☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 26 February, 2010 (26.02.10) | 09 March, 2010 (09.03.10) |

| Name and mailing address of the ISA/ Japanese Patent Office | Authorized officer |
| --- | --- |
| Facsimile No. | Telephone No. |

Form PCT/ISA/210 (second sheet) (July 2009)

**EP 2 518 861 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KURS, A et al.** Wireless Power Transfer via Strongly Coupled Magnetic Resonances. *Science,* 2007, vol. 317 (5834), 83-86